# EUROPEAN PATENT APPLICATION

(11) **EP 2 264 862 A1**
(43) Date of publication of application: **22.12.2010**
(21) Application number: 09162868.5
(22) Date of filing: 16.06.2009
(51) Int. Cl.: H02K 5/124, F16J 15/40, H02K 9/19

(54) **Sealed electric generator and method for sealing an electric generator**

(71) Applicant: Alstom Technology Ltd, 5400 Baden (CH)
(72) Inventor: Hug, Rene, 68169 Mannheim (DE); Langenbacher, Klaus, 67366 Weingarten (DE)

(57) **Abstract**

The sealed electric generator (1) comprises a casing (2) housing a stator (3) and a rotor (4) rotatable within said stator (3). The casing (2) is further provided with two seal rings (5) arranged to seal the inner (6) of the casing (2) against the outer environment (7). Each seal ring (5) is connected to a liquid supply circuit comprising a supply branch (10) with at least a pump (11) for feeding the liquid to the seal ring (5). The sealed electric generator (1) also comprises a pressure sensor (15) arranged to measure the pressure inside of the casing (2). The pressure sensor (15) is connected to a control unit (16) that is connected to and drives said pump (11), to regulate the liquid flow rate in accordance with the measured pressure and thus regulate the drop pressure within the seal ring (5). The present invention also refers to a method for sealing an electric generator.

## Description

### TECHNICAL FIELD

The present invention relates to a sealed electric generator and method for sealing an electric generator.

### BACKGROUND OF THE INVENTION

Sealed electric generators are known to comprise a casing containing a stator and a rotor that is connected via a shaft to a motor (typically a steam turbine or a gas turbine).

The casing is provided with (usually) two seal rings (one at each side end of the rotor) that seal the inner of the generator (normally containing H₂) against the outer atmosphere.

The seal rings are connected to a supply circuit comprising a pump (or more than one pump to guarantee the necessary redundancy) that constantly pumps oil with a constant mass flow rate into the seal rings with a pressure higher than the generator inner pressure.

In the simplest embodiment, oil is fed to the seal rings through a central joint; in the seal ring the oil is diverted such that a portion goes towards the inner of the generator, where it is collected and discharged via an inner discharge branch of the supply circuit, and a further portion goes towards the outer of the generator, where it is collected and discharged via an outer branch of the supply circuit.

The mass flow rate passing through the seal rings defines the oil pressure drop in each seal ring.

As the oil pressure in the inner discharge branch is equal to the generator inner pressure, the oil mass flow rate passing through the seal rings must cause an oil drop pressure equal to the differential pressure between the oil supplied to the seal ring and the generator inner pressure.

Nevertheless, the generator inner pressure depends on a plurality of factors, such as the heat load of the generator, the temperature of the generator gas cooling water and is therefore not constant during operation.

Because of all these factors, generators are usually also provided with pressure regulation systems, arranged to keep the generator inner pressure as constant as possible, nevertheless variation of the generator inner pressure cannot be avoided.

In addition, the oil pressure drop in the seal rings depends on the number and dimensions of the possible abrasions that during normal operation form in the seal rings.

In particular the oil pressure drop decreases with abrasions or seal ring damages; in this case more oil has to flow through the seal rings to reach the needed differential pressure.

For these reasons the mass flow rate passing through the seal rings cannot be constant, but must be regulated such that the oil mass flow rate passing through each seal ring generates a differential pressure substantially equal to the differential pressure between the oil supplied to the seal ring and the generator inner pressure (this pressure being the same as the pressure of the oil discharged from the inner of the generator).

Lacking such a regulation, the differential pressure in the seal rings may become too large, with risk of oil splashing into the generator, or too low, with risk of gas (H₂) extrusion out of the generator into the atmosphere.

Such a regulation is very delicate, as in critical situations regulation must be very fast, i.e. the supply circuit must be able to change the mass flow rate fed to the seal rings in very short time (seconds).

In this respect, traditional supply circuits are provided with a bypass operated by a differential pressure regulation valve.

During operation, the pump supplies a constant amount of oil greater than that needed by the rings, and the differential pressure regulation valve measures the differential pressure between the oil fed to the generator and the generator inner pressure (in this respect the pressure of the oil discharged via the discharge branch is measured) to drive the bypass, such that a part of the oil is diverted to a reservoir before it reaches the seal rings and only the needed amount of oil is fed to the seal rings.

In this way the total mass flow rate is adjusted to the needed amount of oil and also a very quick increase of the flow rate is possible, because the pump generates a large amount of pressurised oil that is partly diverted (in critical situations the increase of oil mass flow rate must be provided is a second or less).

Nevertheless, as the amount of oil pumped by the pump is constantly greater than that really needed and really used by the seal rings, there is a continuous energy waste that causes a costly operation of the generator.

### SUMMARY OF THE INVENTION

The technical aim of the present invention is therefore to provide a sealed electric generator and a method by which the said problems of the known art are eliminated.

Within the scope of this technical aim, an object of the invention is to provide a sealed electric generator and a method that let the generator operation with low energy consumption of the sealing circuit.

Another object of the invention is to provide a sealed electric generator and a method that let a cheaper operation of the sealed generator with respect to traditional sealed electric generators.

The technical aim, together with these and further objects, are attained according to the invention by providing a sealed electric generator and a method in accordance with the accompanying claims.

### BRIEF DESCRIPTION OF THE DRAWINGS

Further characteristics and advantages of the invention will be more apparent from the description of a preferred but non-exclusive embodiment of the sealed electric generator and the method according to the invention, illustrated by way of non-limiting example in the accompanying drawing, in which:
Figure 1 is a schematic partial view of a sealed electric generator according to the invention, and
Figures 2 and 3 are two different embodiments of generators according to the invention with a single supply circuit and a triple supply circuit for the seal rings.

### DETAILED DESCRIPTION OF THE INVENTION

With reference to the figures, these show a sealed electric generator indicated overall by the reference 1.

The electric generator 1 comprises a casing 2 housing a stator 3 and a rotor 4 rotatable within the stator 3.

The casing 2 is further provided with typically two seal rings 5 arranged around the opposite rotor and/or generator shaft ends to seal the inner 6 of the casing 2 against the outer environment 7.

Each seal ring 5 is connected to a liquid supply circuit (typically oil) comprising a supply branch 10 with one or more pumps 11 (usually three pumps) for feeding the liquid to the seal ring 5; for sake of simplicity in the following reference to a single pump will be made.

The supply circuit also comprises an inner discharge branch 12 for taking up the liquid discharged from each of the seal rings 5 towards the inner 6 of the casing 2 and an outer discharge branch 13 for taking up the liquid discharged from each seal ring 5 towards the outer of the casing 2 (the outer environment 7).

The supply branch 10 and the inner and outer discharge branches 12, 13 define a closed circuit comprising a reservoir 19 (the circuit is closed for the liquid, but it is not pressure closed, as the branch 12 has the generator inner pressure and the branch 13 has the atmospheric pressure).

The generator also has a pressure sensor 15 for measuring the pressure inside of the casing 2.

The pressure sensor 15 is connected to a control unit 16 that is connected to and drives the pump 11, to regulate the liquid flow rate in accordance with the measured pressure and thus to regulate the drop pressure within the seal ring 5, such that the pump 11 only pumps the needed liquid flow rate (i.e. only the needed liquid flow rate but no more than the needed).

In particular, the pressure sensor 15 is arranged to measure the differential pressure between two branches among the supply branch 10, the inner discharge branch 12 and the outer discharge branch 13 and the control unit 16 drives the pump 11 such that when the pressure sensor 15 measures a differential pressure different from a prefixed differential pressure, the pump 11 pumps a liquid flow rate arranged to reset the differential pressure to the prefixed differential pressure.

As shown in the figures, the pressure sensor 15 is connected between the supply branch 10 and the inner discharge branch 12 and, when it measures a differential pressure greater than the prefixed differential pressure, the control unit 16 decreases the liquid flow rate to decrease the liquid drop pressure within the seal ring, and when it measures a differential pressure lower than the prefixed differential pressure, the control unit 16 increases the liquid flow rate to increase the drop pressure within the seal ring 5.

In particular the pump 11 increases or decreases the liquid mass flow rate.

Advantageously, the control unit 16 is connected to a frequency converter 17 that drives a motor 18 which activates the pump 11.

The motor 18 activating the pump 11 is a three phase asynchronous or synchronous motor and the control unit 16 comprises a PLC or a PC or a different programmable electronic device.

The operation of the sealed electric generator of the invention is apparent from that described and illustrated and is substantially the following.

The pump 11 takes liquid such as oil from the reservoir 19 and pumps it through the feeding branch 10.

The liquid enters the seal ring 5 and passes through it; in particular a part of the liquid is diverted towards the inner of the generator and a part of the liquid is diverted towards the outer of the generator.

When passing through the seal ring, the liquid undergoes a drop pressure such that the total drop pressure (i.e. the sum of the drop pressure of the liquid diverted towards the inner of the generator and the drop pressure of the liquid diverted towards the outer of the generator) is equal or preferably higher than the differential pressure between the inner and the outer of the generator.

The pressure sensor 15 measures the differential pressure between the liquid in the inner discharge branch 12 (i.e. the pressure inside of the generator) and the supply branch 10 and sends a signal to the control unit 16 indicative of such a differential pressure (thus such a signal is also indicative of the pressure in the inside of the casing 2 of the generator because the pressure in the supply branch is known being the pressure of the pump).

The control unit 16 has a prefixed differential pressure stored in its memory (or gets a prefixed differential pressure setpoint from the power plant control system) and compare the differential pressure measured by the pressure sensor 15 with the prefixed differential pressure.

On the basis of the comparison, the control unit 16 drives the frequency converter 17 that feeds the motor 18.

In particular, when the measured differential pressure is greater than the prefixed differential pressure, the control unit 16 drives the frequency converter 17 such that it decreases the frequency of the electric power fed to the motor 18; when the frequency of the electric power fed to the motor 18 decreases, also the velocity of the pump decreases and thus the liquid mass flow rate decreases.

The pressure drop in each ring depends on the liquid mass flow rate, such that the higher the liquid mass flow rate, the higher the pressure drop.

Thus when the liquid mass flow rate through the rings decreases, also the liquid pressure drop decreased to a value closer to the prefixed differential pressure.

In the same way, when the measured differential pressure is lower than the prefixed differential pressure, the control unit 16 drives the frequency converter 17 such that it increases the frequency of the electric power fed to the motor 18; when the frequency of the electric power fed to the motor 18 increases, also the velocity of the pump increases, the liquid mass flow rate increases and thus the liquid pressure drop is increased to a value closer to the prefixed differential pressure.

When the measured differential pressure is the same as the prefixed differential pressure, the control unit 16 does not change the frequency of the electric power fed to the motor 18, such that the liquid mass flow rate remains the same and the liquid pressure drop remains the same.

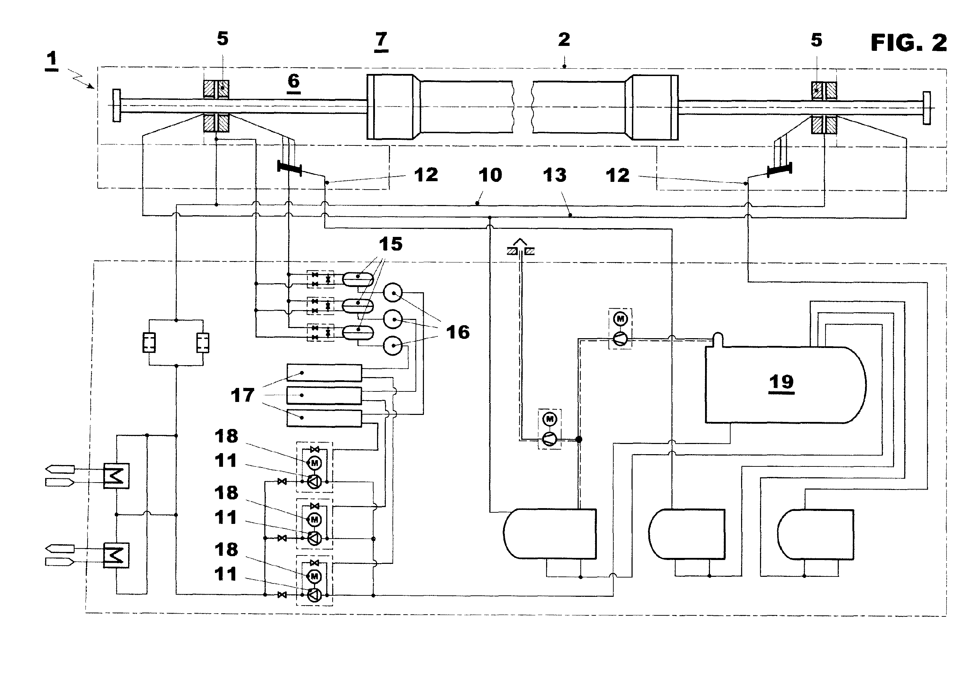

Figure 2 shows an embodiment of the invention with two single circuit seal rings.

In this figure the same reference numbers are used for similar elements.

This kind of circuit with a pressure sensor 15 (or a pressure regulating valve) driving a bypass is known per se; figure 2 shows three pressure sensor 15 (as usual) because of protection reasons; each pressure sensor 15 drives one pump 11. Naturally also a different numbers of pumps and sensors could be provided, so that a number of sensors drive a number of pumps.

Each differential pressure sensor 15 is connected to a control unit 16 that drives a frequency converter 17 that drives a motor 18 that activates a pump 11.

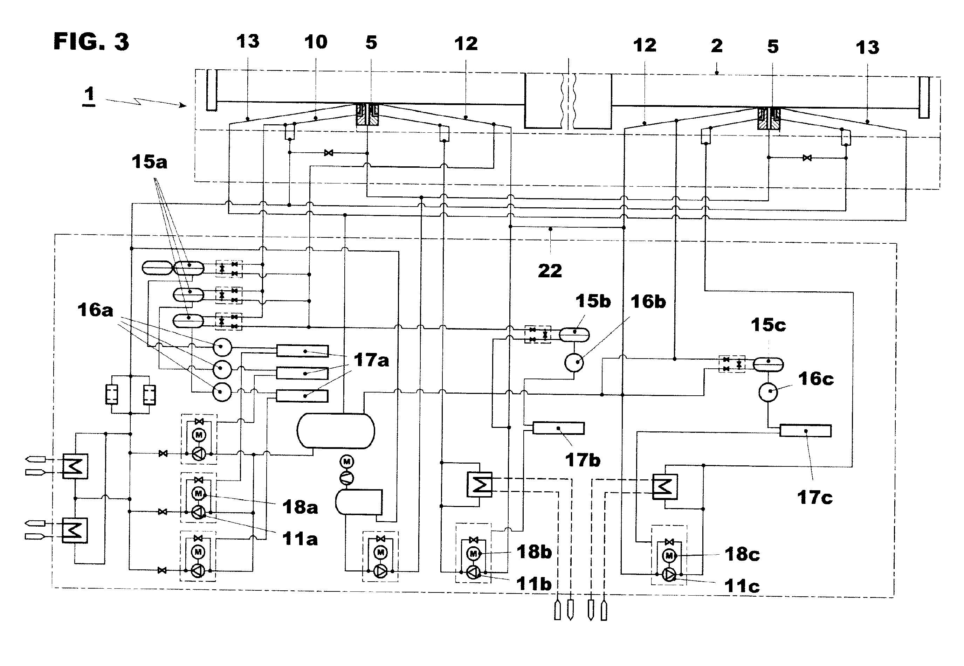

In a different embodiment (figure 3) the seal ring may also be a triple circuit seal ring.

Also in this figure the same reference numbers are used for similar elements.

Triple circuit seal rings have three circuits in parallel in one and the same seal ring, thus the supply circuit has (in addition to the inner discharge branch 12 and the outer discharge branch 13) an outer supply branch that feeds liquid enriched with air, a central supply branch that feeds liquid evacuated before streaming into the seal ring, and an inner supply branch that feeds liquid enriched with gas (the same gas as that contained within the generator, for example H₂).

The circuit with pressure sensors 15a, 15b, 15c driving bypasses is known per se.

In particular, a first group of pressure sensors 15a is connected between the outer supply branch 10 and the inner discharge branch 12 (figure 3 shows three of these sensors) of a seal ring, a second group of pressure sensors 15b is connected between two different locations of the inner discharge branch 12 of one of the seal ring (respectively upstream and downstream of a connecting pipe 22 between the inner discharge branches 12 of the two seal rings, figure 3 shows only one sensor), and a third group of pressure sensors 15c is connected between two different locations of the inner discharge branch 12 of the other seal ring (respectively upstream and downstream of the connecting pipe 22 between the inner discharge branches 12 of the two seal rings, figure 3 shows only one sensor).

Each differential pressure sensor 15a, 15b, 15c is connected to a control unit 16a, 16b, 16c that drives a frequency converter 17a, 17b, 17c that drives a motor 18a, 18b, 18c that activates a pump 11a, 11b, 11c.

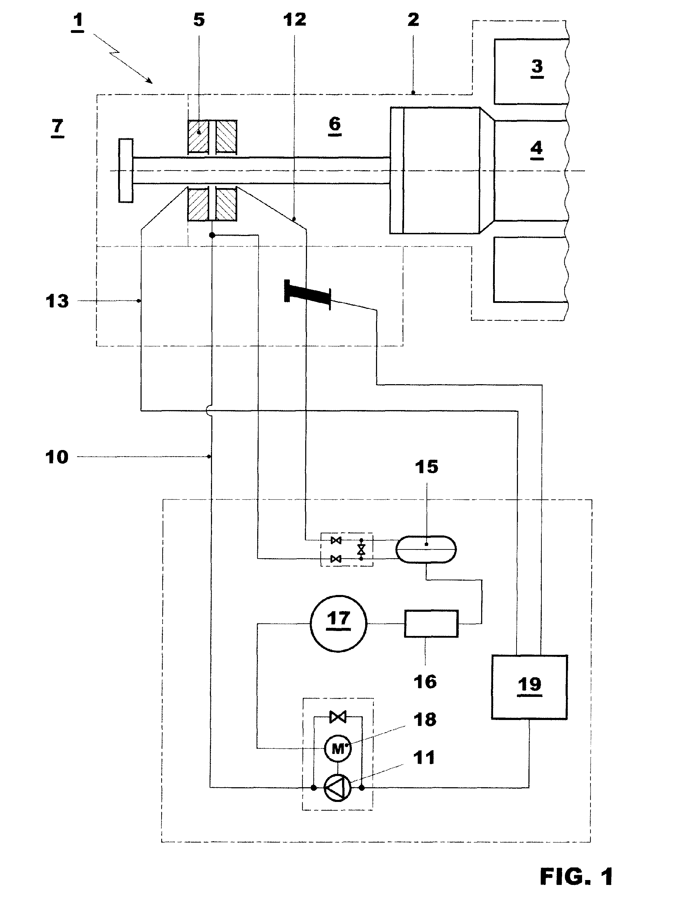

The operation of the first group of pressure sensors 15a is the same as that already described with reference to figure 1.

The second and third group of pressure sensors 15b, 15c measure the pressure in the inner discharge branches and with connection 22 both seal rings can be brought to the same level/height of the column in the discharge branch.

In particular, if the differential pressure measured by the pressure sensor 15a is higher than the prefixed differential pressure, the control unit 16 increases the frequency of the motor; thus the motor pumps more oil such that in the seal ring there is a higher pressure on the inner side of the generator. So some oil streams from the inner circuit of the rings into the outer circuit of the rings and the pressure in the discharge branch decreases.

If the differential pressure is lower than the prefixed differential pressure, the control unit 16 decreases the motor speed, such that the oil pressure in the inner supply branch is lower than the pressure on the outer supply branch. Thus the oil streams from the outer circuit of the rings into the inner circuit of the rings and the differential pressure rises up.

The branch 22 is used to get the oil out of the inner discharge branches in case of blackout, when only the outer supply branch is driven and some oil streams from the outer supply branch into inner discharge branch.

The present invention also relates to method for sealing an electric generator.

According to the method (with reference to figure 1), the pressure in the inner of the casing 2 is measured and this value is communicated to the control unit 16 that drives the pump 11, to regulate the liquid flow rate in accordance with the measured pressure, to regulate the drop pressure within the seal ring 5 such that the pump 11 only pumps the needed liquid flow rate (i.e. only the needed liquid flow rate but no more than the needed).

In particular the pressure within the casing 2 is measured by measuring the differential pressure between two branches among the at least a supply branch 10, the inner discharge branch 12 and the outer discharge branch 13.

In particular, the control unit 16 drives the pump 11 such that when the measured differential pressure is different from the prefixed differential pressure, the liquid flow rate is regulated to reset the differential pressure to the prefixed differential pressure.

The differential pressure is measured between the supply branch and the inner discharge branch 12; in case of single circuit seal ring the supply branch is only one and here the pressure is measures, in case of triple circuit seal ring the pressure is measured at the outer supply branch.

When a differential pressure greater than the prefixed differential pressure is measured, the liquid flow rate is decreased to decrease the pressure drop of the liquid passing through the seal ring 5.

On the contrary, when a differential pressure lower than the prefixed differential pressure is measured, the liquid flow rate is increased to increase the pressure drop of the liquid passing through the seal ring 5.

In particular the liquid mass flow rate is increased or decreased.

The sealed electric generator and the method conceived in this manner are susceptible to numerous modifications and variants, all falling within the scope of the inventive concept; moreover all details can be replaced by technically equivalent elements.

In practice the materials used and the dimensions can be chosen at will according to requirements and to the state of the art.

### REFERENCE NUMBERS

- 1: sealed electric generator
- 2: casing
- 3: stator
- 4: rotor
- 5: seal ring
- 6: inner of the casing
- 7: outer environment
- 10: supply branch
- 11, 11a, 11b, 11c: pump
- 12: inner discharge branch
- 13: outer discharge branch
- 15, 15a, 15b, 15c: pressure sensor
- 16, 16a, 16b, 16c: control unit
- 17, 17a, 17b, 17c: frequency converter
- 18, 18a, 18b, 18c: motor
- 19: reservoir
- 22: connecting pipe for regulation during blackout

## Claims

1. Sealed electric generator (1) comprising a casing (2) housing a stator (3) and a rotor (4) rotatable within said stator (3), said casing (2) being further provided with at least one seal ring (5) arranged to seal the inner (6) of the casing (2) against the outer environment (7) connected to a liquid supply circuit comprising at least a supply branch (10) with at least a pump (11) for feeding the liquid to the seal ring (5), said sealed electric generator (1) also comprising a pressure sensor (15) arranged to measure the pressure inside of the casing (2) to regulate the liquid flow rate in accordance with the measured pressure and thus regulate the drop pressure within the seal ring (5), **characterised in that** said pressure sensor (15) is connected to a control unit (16) that is connected to and drives said pump (11), such that said pump only pumps the needed liquid flow rate.

2. Electric generator (1) as claimed in claim 1, **characterised in that** the supply circuit also comprises an inner discharge branch (12) for taking up the liquid discharged from the seal ring (5) towards the inner (6) of the casing (2) and an outer discharge branch (13) for taking up the liquid discharged from the seal ring (5) towards the outer environment (7), wherein the pressure sensor (15) is arranged to measure the differential pressure between two branches among the at least a supply branch (10), the inner discharge branch (12) and the outer discharge branch (13).

3. Electric generator (1) as claimed in claim 2, **characterised in that** the control unit (16) drives the pump (11) such that when the pressure sensor (15) measures a differential pressure different from a prefixed differential pressure, the pump pumps a liquid flow rate arranged to reset the differential pressure to the prefixed differential pressure.

4. Electric generator (1) as claimed in claim 3, **characterised in that** said pressure sensor (15) is connected between one of the at least a supply branch (10) and the inner discharge branch (12), and **in that** when it measures a differential pressure greater than the prefixed differential pressure the control unit (16) decreases the liquid flow rate to decrease the liquid drop pressure within the seal ring (5), and when it measures a differential pressure lower than the prefixed differential pressure, the control unit (16) increases the liquid flow rate to increase the drop pressure within the seal ring (5).

5. Electric generator (1) as claimed in claim 1, **characterised in that** said control unit (16) is connected to a frequency converter (17) that drives a motor (18) which activates said pump (11).

6. Electric generator (1) as claimed in claim 5, **characterised in that** said motor (18) that activates the pump (11) is a three phase asynchronous motor or a three phase synchronous motor.

7. Electric generator (1) as claimed in claim 1, **characterised in that** said control unit (16) comprises a PLC or a PC or different programmable electronic device.

8. Electric generator (1) as claimed in claim 1, **characterised in that** the pump (11) increases or decreases the liquid mass flow rate.

9. Electric generator (1) as claimed in claim 4, **characterised in that** said seal ring (5) is a single circuit seal ring.

10. Electric generator (1) as claimed in claim 4, **characterised in that** said seal ring (5) is a three circuit seal ring, and **in that** the at least a supply branch (10) connected to the pressure sensor (15) is the outer supply branch.

11. Method for sealing an electric generator (1) comprising a casing (2) housing a stator (3) and a rotor (4) rotatable within said stator (3), said casing (2) being further provided with at least one seal ring (5), arranged to seal the inner (6) of the casing (2) against the outer environment (7), connected to a liquid supply circuit comprising at least a supply branch (10) with at least a pump (11) for feeding the liquid to the seal ring (5), wherein the pressure of the inner of the casing (2) is measured to regulate the liquid flow rate accordingly and thus regulate the drop pressure within the seal ring (5), **characterised in that** the measured pressure is communicated to a control unit (16) that drives the pump (11), such that said pump only pumps the needed liquid flow rate.

12. Method as claimed in claim 11, **characterised in that** the supply circuit also comprises an inner discharge branch (12) for taking up the liquid discharged from the seal ring (5) towards the inner (6) of the casing (2) and an outer discharge branch (13) for taking up the liquid discharged from the seal ring (5) towards the outer environment (7), wherein the pressure of the inner of the casing (2) is measured by measuring the liquid differential pressure between two branches among the at least a supply branch (10), the inner discharge branch (12) and the outer discharge branch (13).

13. Method as claimed in claim 12, **characterised in that** the control unit (16) drives the pump (11) such that when the measured differential pressure is different from a prefixed differential pressure, the liquid flow rate is regulated to reset the differential pressure to the prefixed differential pressure.

14. Method as claimed in claim 13, **characterised in that** the differential pressure is measured between at least a supply branch (10) and the inner discharge branch (12), and **in that** when a differential pressure greater than the prefixed differential pressure is measured, the liquid flow rate is decreased to decrease the drop pressure within the seal ring (5), and when a differential pressure lower than the prefixed differential pressure is measured, the liquid flow rate is increased to increase the drop pressure within the seal ring (5).

15. Method as claimed in claim 14, **characterised in that** the liquid mass flow rate is increased or decreased.
